# EUROPEAN PATENT SPECIFICATION

(11) **EP 3 347 610 B1**
(45) Date of publication and mention of the grant of the patent: **10.07.2019**
(21) Application number: 15767197.5
(22) Date of filing: 09.09.2015
(51) Int. Cl.: F16C 27/08, F16C 17/04, F16C 27/02, F16C 33/10

(54) **BEARING ELEMENT**
LAGERELEMENT
ÉLÉMENT D'APPUI

(43) Date of publication of application: 18.07.2018
(73) Proprietor: Wärtsilä Finland Oy, 65100 Vaasa (FI)
(72) Inventor: ISTOLAHTI, Jaakko, FI-65100 Vaasa (FI)
(74) Representative: Berggren Oy, Helsinki & Oulu
(86) International application number: PCT/FI2015/050588
(87) International publication number: WO 2017/042421

(56) References cited:
- DE-U1- 29 503 755
- US-A- 3 090 655

## Description

### Technical field of the invention

The present invention relates to a bearing element in accordance with the preamble of claim 1.

### Background of the invention

Thrust bearings are used in many different applications for carrying axial loads (see for example DE 295037 55).

A thrust bearing allows the rotation of a shaft or other rotating part against a stationary part. The operation of thrust bearings can be based on many different principles. In the simplest form, two parts can be arranged to slide against each other. However, usually the friction between the rotating parts is reduced in some way, for instance by having rolling elements, such as balls or rollers, between the rotating parts, or by utilizing a fluid film or magnetic field to prevent direct contact between two parts rotating in relation to each other.

Some examples of applications where thrust bearings are used are the crankshafts and camshafts of piston engines. For instance, main bearings of a piston engine carry the radial forces that are directed at the crankshaft, and thrust bearings are used for carrying the axial forces. The axial forces are relatively small compared to the radial forces, but the axial forces are often shock-type forces. Many known thrust bearings are not particularly good at handling the shock-type forces.

### Summary of the invention

The object of the present invention is to provide an improved bearing element for carrying axial loads. The bearing element has an annular shape and comprises a first end surface, which is configured to be supported against an object that is stationary in relation to the bearing element, and a second end surface, which is configured to support a part rotating in relation to and coaxially with the bearing element. The characterizing features of the bearing element according to the invention are given in the characterizing part of claim 1.

According to the invention, the bearing element is provided with at least one groove, which is located at a distance from both the first end surface and the second end surface of the bearing element, extends radially outwards from the inner perimeter of the bearing element or radially inwards from the outer perimeter of the bearing element and runs along the circumference of the bearing element.

Because of the annual groove, the bearing element is flexible and damps axial forces. The bearing element has a simple construction and can be made of a single piece of material.

According to the invention, the bearing element comprises a first groove extending radially outwards from the inner perimeter of the bearing element and a second groove extending radially inwards from the outer perimeter of the bearing element. By providing the bearing element with grooves on both the inner and the outer perimeter, the elasticity of the bearing element can be increased while the shape of the bearing surface is better preserved when an axial load is applied onto the bearing element.

According to an embodiment of the invention, the second groove is arranged at a different distance from the first end surface of the bearing element than the first groove. This allows the grooves to be made deeper and the grooves can even overlap.

According to an embodiment of the invention, the groove(s) run(s) around the whole circumference of the bearing element. With grooves running around the whole circumference, the bearing element is deformed uniformly and the bearing surface better preserves its shape.

According to an embodiment of the invention, the depth of the groove in the radial direction of the bearing element is 30 to 80 percent of the width of the second end surface of the bearing element. According to another embodiment of the invention, the depth of the groove is 50 to 70 percent of the width of the second end surface of the bearing element.

According to an embodiment of the invention, the width of the groove in the axial direction of the bearing element is 5 to 25 percent of the height of the bearing element in said direction.

According to an embodiment of the invention, the bearing element comprises a body made of a spring steel and a coating made of a bearing metal and forming the second end surface of the bearing element. By using different materials for the body and the bearing surface, both the elastic and tribological properties of the bearing element can be optimized.

According to an embodiment of the invention, the bearing element comprises at least two grooves extending radially outwards from the inner perimeter of the bearing element and at least two grooves extending radially inwards from the outer perimeter of the bearing element.

### Brief description of the drawings

Embodiments of the invention are described below in more detail with reference to the accompanying drawings, in which
Fig. 1 shows a top view of a bearing element according to an embodiment of the invention,
Fig. 2 shows a cross-sectional view of the bearing element of figure 1 taken along line A-A,
Fig. 3 shows a cross-sectional view of a bearing element according to another embodiment of the invention, and
Fig. 4 shows schematically a cross-sectional view of a bearing element supporting a rotatable shaft.

### Description of embodiments of the invention

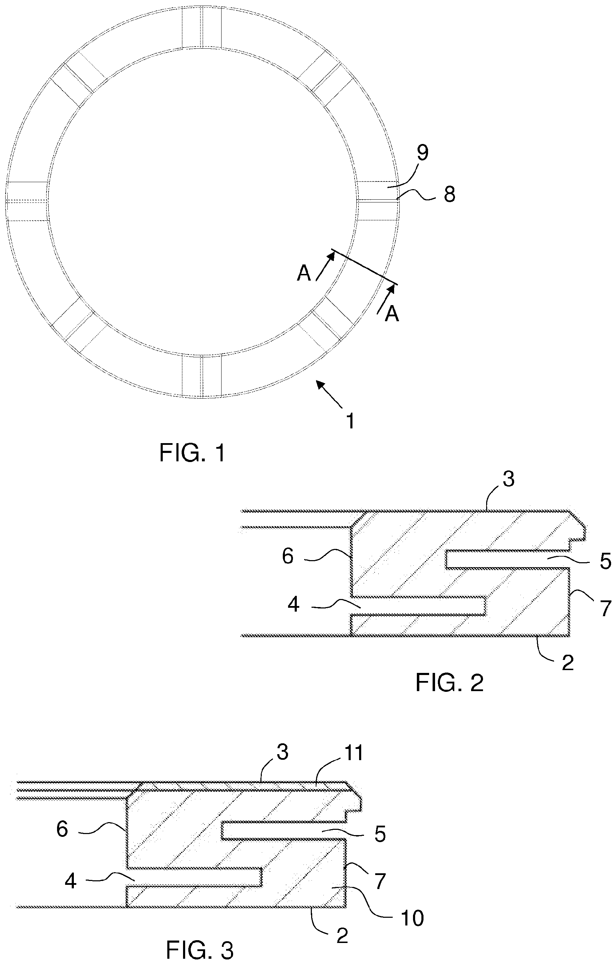

Figure 1 shows a top view of a bearing element 1 according to an embodiment of the invention. In figure 2 is shown a cross-sectional view of the same bearing element 1 taken along line A-A of figure 1. The bearing element 1 is configured to be assembled between two objects which rotate in relation to each other. For instance, one of the objects can be stationary and the other object can be a rotating shaft. The bearing element 1 is configured to carry axial loads.

The bearing element 1 has an annular shape. It is thus a ring-like part having an open center region. The bearing element 1 has a first end surface 2 and a second end surface 3. The first end surface 2 is configured to be supported against an object that is stationary in relation to the bearing element 1. The bearing element 1 can be a part of a bearing module, in which case the first end surface 2 can be supported against a part forming the body of the bearing module. However, the bearing element 1 could also be attached directly to a stationary part of a machine comprising a rotating part, which rotates against the bearing element 1. The bearing element 1 also has a second end surface 3. The second end surface 3 is configured to support a part rotating in relation to the bearing element 1. The second end surface 3 is thus a bearing surface. In case the bearing element 1 forms part of a bearing module, the part rotating in relation to the bearing element 1 can be a part of the bearing module. However, the rotating part, such as a shaft, could also be arranged directly against the second end surface 3 of the bearing element 1. The rotating part rotates coaxially with the bearing element 1.

In the embodiment of figures 1 to 3, the second end surface 3 of the bearing element 1 forms part of a fluid bearing, where a fluid film is formed between the second end surface 3 and the part rotating in relation to the bearing element 1. Therefore, the second end surface 3 is provided with chamfered areas 8 and with grooves 9, which facilitate the forming of a suitable oil film between the parts. Both the chamfered areas 8 and the grooves 9 run in the radial direction from the outer perimeter 7 of the bearing element 1 towards the inner perimeter 6 of the bearing element 1 and extend over the whole width of the ring-shaped part.

The bearing element 1 according to the invention is further provided with at least two grooves 4, 5, one of which extends radially outwards from the inner perimeter 6 of the bearing element 1 and the other one extends radially inwards from the outer perimeter 7 of the bearing element 1 and both grooves run along the circumference of the bearing element 1. The grooves 4, 5 are thus annular grooves. The grooves 4, 5 are located at a distance from both the first end surface 2 and the second end surface 3 of the bearing element 1. The grooves 4, 5 thus divide the bearing element 1 into a lower portion and an upper portion in the axial direction of the bearing element 1. The expressions "lower" and "upper" refer to the orientation of the bearing element 1 in figures 2 and 3, and the bearing element 1 can also be used in any other position. The axial direction is the direction perpendicular to the bearing surface formed by the second end surface 3. When an axial load is applied onto the bearing element 1, the lower portion and the upper portion can bend towards each other. The grooves 4, 5 thus increase the flexibility of the bearing element 1, which increases the ability of the bearing element 1 to damp shock-type axial forces.

In the embodiment of the figures, the bearing element 1 comprises a first groove 4 extending radially outwards from the inner perimeter 6 and a second groove 5 extending radially inwards from the outer perimeter 7. Each of the first groove 4 and the second groove 5 has a depth that is over half of the width of the ring of the bearing element 1. The first groove 4 is at a first distance from the first end surface 2 of the bearing element 1 and the second groove 5 is at a second distance from the first end surface 2. The second distance is greater than the first distance, and the second groove 5 is thus located farther from the first end surface 2 of the bearing element 1 than the first groove 4. The depth of the second groove 5 is approximately the same as the depth of the first groove 4.

The bearing element 1 could also comprise more than two annular grooves 4, 5. For instance, both the inner perimeter 6 of the bearing element 1 and the outer perimeter 7 of the bearing element 1 could be provided with two or more grooves.

The bearing element 1 can be made of a single piece of material as shown in figures 1 and 2. However, in order to avoid compromises between the tribological properties and elastic properties of the bearing element 1, the bearing element 1 can be provided with a coating 11 on the second end surface 3, as shown in figure 3. In the embodiment of figure 3, the body 10 of the bearing element 1 is made of a material with good elastic properties to achieve good ability to damp shock-type axial forces. For instance, the body 10 of the bearing element 1 can be made of a spring steel. The coating 11 that forms the second end surface 3 can be made of a material providing good friction properties. The coating can thus be made of a bearing metal.

The bearing element 1 according to the invention can be used for example in piston engines. For instance, the bearing element 1 is suitable for carrying axial loads acting on a crankshaft or a camshaft of a large piston engine, such as a ship engine or a power plant engine.

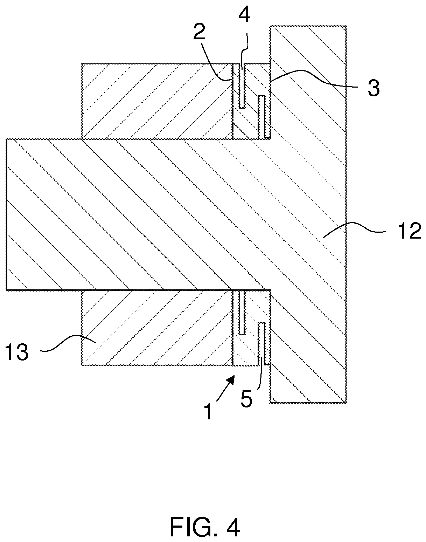

In the example of figure 4, a bearing element 1 is arranged to carry axial forces of a rotating shaft 12. Figure 4 shows a shaft 12, which is supported by a bearing 13. The bearing 13 carries the radial load of the shaft 12. The bearing element 1 is arranged between the bearing 13 and a flange of the shaft 12. The first end surface 2 of the bearing element 1 is supported against the bearing 13. The bearing 13 is a stationary part and therefore the bearing 13 and the bearing element 1 do not rotate in relation to each other. The second end surface 3 of the bearing element 1 faces the flange of the shaft 12. In case the shaft 12 moves axially so that the flange of the shaft 12 moves towards the bearing element 1, the bearing element 1 can carry the axial load, while simultaneously allowing rotation of the shaft 12. The shaft 12 is coaxial with the bearing element 1, and the shaft 12 can thus rotate coaxially in relation to the bearing element 1. The grooves 4, 5 of the bearing element 1 make the bearing element 1 resilient, and the bearing element 1 is thus compressed in the axial direction when an axial load is applied onto it. The arrangement of figure 4 could also be provided with a second bearing element 1, which would be arranged to carry axial forces in the opposite direction.

It will be appreciated by a person skilled in the art that the invention is not limited to the embodiments described above, but may vary within the scope of the appended claims.

## Claims

1. A bearing element (1) for carrying axial loads, the bearing element (1) having an annular shape and comprising a first end surface (2), which is configured to be supported against an object (13) that is stationary in relation to the bearing element (1), and a second end surface (3), which is configured to support a part (12) rotating in relation to and coaxially with the bearing element (1), the bearing element (1) being provided with at least one groove (5), which is located at a distance from both the first end surface (2) and the second end surface (3) of the bearing element (1), extends radially inwards from the outer perimeter (7) of the bearing element (1) and runs along the circumference of the bearing element (1), **characterized in that** the bearing element (1) comprises another groove (4), which is located at a distance from both the first end surface (2) and the second end surface (3) of the bearing element (1), extends radially outwards from the inner perimeter (6) of the bearing element (1) and runs along the circumference of the bearing element (1).

2. A bearing element according to claim 1, wherein fhe grooves (4, 5) are arranged at different distances from the first end surface (2) of the bearing element (1).

3. A bearing element according to claim 1 or 2, wherein the grooves (4, 5) run around the whole circumference of the bearing element (1).

4. A bearing element (1) according to any of the preceding claims, wherein the depth of the groove (4, 5) in the radial direction of the bearing element (1) is 30 to 80 percent of the width of the second end surface (3) of the bearing element (1).

5. A bearing element (1) according to claim 4, wherein the depth of the groove (4, 5) is 50 to 70 percent of the width of the second end surface (3) of the bearing element (1).

6. A bearing element (1) according to any of the preceding claims, wherein the width of the groove (4, 5) in the axial direction of the bearing element (1) is 5 to 25 percent of the height of the bearing element (1) in said axial direction.

7. A bearing element (1) according to any of the preceding claims, wherein the bearing element (1) comprises a body (10) made of a spring steel and a coating (11) made of a bearing metal and forming the second end surface (3) of the bearing element (1).

8. A bearing element (1) according to any of the preceding claims, wherein the bearing element comprises at least two grooves (4) extending radially outwards from the inner perimeter (6) of the bearing element (1) and at least two grooves (5) extending radially inwards from the outer perimeter (7) of the bearing element (1).

## Patentansprüche

1. Lagerelement (1) zum Tragen von axialen Lasten, wobei das Lagerelement (1) eine ringförmige Form aufweist und eine erste Endfläche (2), die eingerichtet ist, um gegen einen Gegenstand (13) getragen zu sein, der in Beziehung zu dem Lagerelement (1) stationär ist, und eine zweite Endfläche (3), die eingerichtet ist, um ein Teil (12) zu tragen, das sich in Beziehung zu und koaxial mit dem Lagerelement (1) dreht, umfasst, wobei das Lagerelement (1) mit mindestens einer Nut (5) versehen ist, die sich in einem Abstand von sowohl der ersten Endfläche (2) als auch der zweiten Endfläche (3) des Lagerelements (1) befindet, sich radial nach innen von dem äußeren Umkreis (7) des Lagerelements (1) erstreckt und entlang des Umfangs des Lagerelements (1) verläuft, **dadurch gekennzeichnet, dass** das Lagerelement (1) eine andere Nut (4) umfasst, die sich in einem Abstand von sowohl der ersten Endfläche (2) als auch der zweiten Endfläche (3) des Lagerelements (1) befindet, sich radial nach außen von dem inneren Umkreis (6) des Lagerelements (1) erstreckt und entlang des Umfangs des Lagerelements (1) verläuft.

2. Lagerelement nach Anspruch 1, wobei die Nuten (4, 5) in unterschiedlichen Abständen von der ersten Endfläche (2) des Lagerelements (1) angeordnet sind.

3. Lagerelement nach Anspruch 1 oder 2, wobei die Nuten (4, 5) um den gesamten Umfang des Lagerelements (1) verlaufen.

4. Lagerelement (1) nach einem der vorhergehenden Ansprüche, wobei die Tiefe der Nut (4, 5) in der radialen Richtung des Lagerelements (1) 30 bis 80 Prozent der Breite der zweiten Endfläche (3) des Lagerelements (1) beträgt.

5. Lagerelement (1) nach Anspruch 4, wobei die Tiefe der Nut (4, 5) 50 bis 70 Prozent der Breite der zweiten Endfläche (3) des Lagerelements (1) beträgt.

6. Lagerelement (1) nach einem der vorhergehenden Ansprüche, wobei die Breite der Nut (4, 5) in der axialen Richtung des Lagerelements (1) 5 bis 25 Prozent der Höhe des Lagerelements (1) in der axialen Richtung beträgt.

7. Lagerelement (1) nach einem der vorhergehenden Ansprüche, wobei das Lagerelement (1) einen Körper (10), der aus Federstahl hergestellt ist, und eine Beschichtung (11), die aus Lagermetall hergestellt ist und die zweite Endfläche (3) des Lagerelements (1) bildet, umfasst.

8. Lagerelement (1) nach einem der vorhergehenden Ansprüche, wobei das Lagerelement mindestens zwei Nuten (4), die sich radial nach außen von dem inneren Umkreis (6) des Lagerelements (1) erstrecken, und mindestens zwei Nuten (5), die sich radial nach innen von dem äußeren Umkreis (7) des Lagerelements (1) erstrecken, umfasst.

## Revendications

1. Élément de palier (1) destiné à supporter des charges axiales, l'élément de palier (1) présentant une forme annulaire et comprenant une première surface d'extrémité (2) configurée pour être supportée contre un objet (13) immobile par rapport à l'élément de palier (1), et une deuxième surface d'extrémité (3) configurée pour supporter une partie (12) rotative par rapport à l'élément de palier (1) et coaxiale à celui-ci, l'élément de palier (1) étant doté d'au moins une rainure (5) située à une distance à la fois de la première surface d'extrémité (2) et de la deuxième surface d'extrémité (3) de l'élément de palier (1), laquelle s'étend radialement vers l'intérieur à partir du périmètre extérieur (7) de l'élément de palier (1) et longe la circonférence de l'élément de palier (1), **caractérisé en ce que** l'élément de palier (1) comprend une autre rainure (4) située à une distance à la fois de la première surface d'extrémité (2) et de la deuxième surface d'extrémité (3) de l'élément de palier (1), laquelle s'étend radialement vers l'extérieur à partir du périmètre intérieur (6) de l'élément de palier (1) et longe la circonférence de l'élément de palier (1).

2. Élément de palier selon la revendication 1, dans lequel les rainures (4, 5) sont disposées à des distances différentes de la première surface d'extrémité (2) de l'élément de palier (1).

3. Élément de palier selon la revendication 1 ou 2, dans lequel les rainures (4, 5) longent toute la circonférence de l'élément de palier (1).

4. Élément de palier (1) selon l'une quelconque des revendications précédentes, dans lequel la profondeur de la rainure (4, 5) dans la direction radiale de l'élément de palier (1) mesure de 30 à 80 pourcents de la largeur de la deuxième surface d'extrémité (3) de l'élément de palier (1).

5. Élément de palier (1) selon la revendication 4, dans lequel la profondeur de la rainure (4, 5) mesure de 50 à 70 pourcents de la largeur de la deuxième surface d'extrémité (3) de l'élément de palier (1).

6. Élément de palier (1) selon l'une quelconque des revendications précédentes, dans lequel la largeur de la rainure (4, 5) dans la direction axiale de l'élément de palier (1) mesure de 5 à 25 pourcents de la hauteur de l'élément de palier (1) dans ladite direction axiale.

7. Élément de palier (1) selon l'une quelconque des revendications précédentes, dans lequel l'élément de palier (1) comprend un corps (10) constitué d'un acier à ressort et un revêtement (11) constitué d'un métal antifriction et formant la deuxième surface d'extrémité (3) de l'élément de palier (1).

8. Élément de palier (1) selon l'une quelconque des revendications précédentes, dans lequel l'élément de palier comprend au moins deux rainures (4) s'étendant radialement vers l'extérieur à partir du périmètre intérieur (6) de l'élément de palier (1) et au moins deux rainures (5) s'étendant radialement vers l'intérieur à partir du périmètre extérieur (7) de l'élément de palier (1).
